(19)

Europäisches
Patentamt
European
Patent Office
Office européen
des brevets

(11)  **EP 2 416 196 A1**

(12)  **EUROPEAN PATENT APPLICATION**

(43) Date of publication:
08.02.2012  Bulletin 2012/06

(51) Int Cl.:
***G02B 6/48*** (2006.01)

(21) Application number: **10251371.0**

(22) Date of filing: **02.08.2010**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **British Telecommunications public limited company
London EC1A 7AJ (GB)**

</td><td>

(72) Inventor: **The designation of the inventor has not yet been filed**

(74) Representative: **Lidbetter, Timothy Guy Edwin et al
BT Group Legal
Intellectual Property Department
PP C5A, BT Centre
81 Newgate Street
London
EC1A 7AJ (GB)**

</td></tr>
</table>

(54)  **Optical fibre securing device**

(57)  A method of discouraging movement of an optical fibre within a tube, by positioning the tube in a helical configuration comprising curves with dimensions equal to or greater than the optical fibre minimum bend radius, and causing the optical fibre to bear upon the tube inner surface when a pulling force is applied to the optical fibre.

FIGURE 2A

**Description**

The present invention relates to methods and apparatus relating to the installation of cables, particularly but not exclusively to applications of blown fibre in aerial installations.

In the UK, the telecommunications core network is now composed primarily of optical fibre and it is expected the network will expand to the access network. The access network has however traditionally comprised copper wires, which has proved to be a transmission bottleneck because of the significantly reduced transmission capacity of copper wire compared to optical fibre. While many commercial and industrial entities have since migrated to optical fibre over the "last mile", most private or residential customers still remain connected by copper twisted pairs for reasons mainly of cost. Migration to an all-optical network is however gradually taking place, where the benefits of a fibre-based core network can be realised by leading fibre nearer to the home or premises ("FTTx") to deliver significantly improved data transmission rates and capacities to residential customers.

One way of upgrading the last mile from copper to fibre is to deploy optical fibre cables. Such cables can take the form of optical cables, in which the fibre element within is protected by layers of insulation and strength members surrounding it under a tough exterior sheath or jacket. All the elements, including the fibre component, of such optical cables can be handled as a unit as they are typically coupled to each other, so that during use all elements would be subject to about the same level of tension or stress.

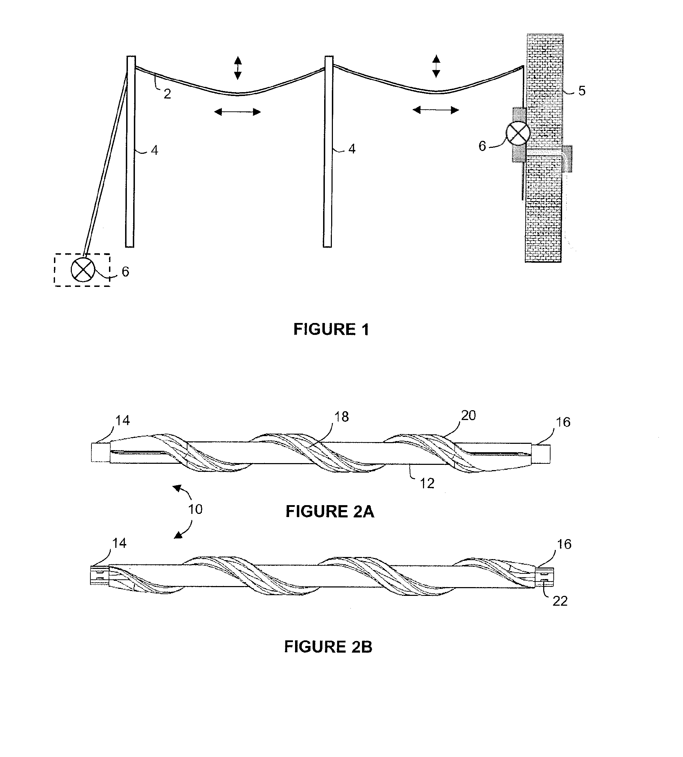

Alternatively, "blown fibre" can be installed using the technique described in EP108590, wherein an empty fibre duct or tube is first installed along the route between the two points to be connected. A fibre element - one or more individual optical fibres making up a fibre unit - can separately be installed into the waiting tube at a later date, by inserting it through using compressed air to generate viscous drag along the surface of the fibre unit. In this description, depending on context, references to "cables" can be used interchangeably with references to individual optical fibres and bundles of fibre units as well as cables comprising such fibres and fibre units, and tubes including the various types of conduits and ducts deployed along various sections of the network. Currently, about 60% of the UK's residential customers obtain their telecommunications connections via aerial or overhead copper cables or wires originating from a local distribution point within the access network, in which lengths of dropwire or aerial cable are suspended between utility or telephone poles which lead to each of the premises served by the distribution point as depicted in Figure 1.

In use, overhead cables face high levels of and variations in environmental stress. Load factors in the form of temperature changes, wind, rain, ice build-up, birds, as well as the cable's own weight put a tensile load on the cable, particularly at its ends, resulting in expansion and contraction of the cable.

Optical fibre can be deployed for aerial use as well, although special considerations are required to take into account the fragility of the fibre and other properties particular to fibre which do not exist in copper cables, such as the minimum bend radius of optical fibres and strain. Optical fibre is already susceptible to both mechanical failure (e.g. hairline cracking and breakage) and optical loss (e.g. signal attenuation from excessive bending). When used in a high-tension overhead installation, these problems are exacerbated.

The applicants have developed a blown fibre droptube (BFD) for aerial blown fibre applications as an alternative to the suspension of conventional optical cables. This is designed to withstand environmental loading factors expected within the UK, but which also breaks safely in the event of e.g. a vehicle striking the BFD so that the cable instead of the pole is brought down.

In the manner usual in blown fibre, "empty" BFDs (i.e. without an optical fibre element within) are installed first, and optical fibre later blown through them to provide an optical link. The optical fibre is terminated at each end typically in a splice in a joint closure. It is envisaged that BFDs will be installed along the same routes currently taken by copper overhead cables, to augment or to replace aerial copper connections.

Unlike conventional optical cables, the blown fibre element is not coupled to the tube or any part thereof: it remains completely loose within the BFD within the cable span between points. This has the advantage of allowing the fibre element a degree of movement in use across the fibre span within the tube, compensating for and equalising the effects of loading on the external cable tube e.g. during temperature change. However, this also means that the fibre element is spliced or otherwise connectorised at its ends independently of the rest of the cable, in contrast with conventional optical cables which are secured as a whole at its ends. Stresses and strains propagated along the cable in the form of e.g. shear stress, torsion, excessive vibrations, or the like can act on mechanically and structurally weak points such as splices. It is known that optical fibre generally can cope with stresses (tensile or compressive) by e.g. stretching, but levels beyond this can cause premature optical failure. At an extreme, the fibre may be physically damaged, pulled out or snapped at splice points and other weak sections along its length.

As noted above, fibre units can remain operational to an acceptable degree even if stretched, typically up to about 1 % along its length. This means that a 50 m span of fibre can elongate by 0.5 m resulting in "excess" fibre requiring management and accommodation; even more excess fibre will result over greater lengths of fibre over a number of spans.

It is therefore important to ensure that spans of blown fibres are secured in a way for it to cope with the expected environmental loading during use, in accordance with its physical and operational characteristics, and in a way which allows the fibre unit a degree of freedom of movement in the overhead section of the network.

Optical cable securing methods include the simple clamping the cable to restraints or the like at each end. This would not work well for blown fibre as doing so introduces an additional point of weakness along the fibre unit.

A solution in an aerial application is known from WO2007/113522, wherein a section of fibre within a blown fibre tube is wound in a figure-of-eight configuration. Another method is discussed in EP1557707 in the context of conventional optical cables, in which a portion of the cable is looped to form coupling coils so that internal fibres are frictionally coupled to the buffer tube to prevent fibre movement relative to other members of the cable. The coils or loops formed from the methods described in the two solutions above tend to be relatively large owing to the need to respect the minimum bend radius of the optical fibre. The housing necessary to accommodate them is relatively bulky. It may be that only one such housing is necessary at the customer end, (unless it the building were a multiple dwelling unit or commercial), but it is an eyesore particularly in a residential application, and yet another box to be added to the other boxes already cluttering the wall. Real issues arise in applications where the securing is to be achieved in nodes up on telegraph poles or within footway boxes or cabinets. In the UK up to forty customers can be served by a standard telegraph pole, and large bulky boxes containing fibre loops and coils are not only cumbersome and space-consuming, they are also susceptible to damage and vandalism.

Another approach is described in FR27074345 in which conventional optical cable (i.e. not blown fibre) is suspended horizontally from pylons. The cable is wound in a helical fashion along a groove of an inner cone or cylinder. An outer section fits over the inner section including the wound cable. The cable sandwiched between the two sections is thus secured.

It would be desirable to secure blown fibre deployed in aerial installations to protect weak sections from excessive stresses placed upon its length, in a less obtrusive manner which is less vulnerable to physical damage.

According to a first aspect of the invention, there is provided a method of discouraging movement of an optical fibre within a tube, by positioning the tube in a helical configuration comprising curves with dimensions equal to or greater than the optical fibre minimum bend radius, and causing the optical fibre to bear upon the tube inner surface when a pulling force is applied to the optical fibre.

By discouraging or preventing movement of the optical fibre within and relative to the tube at only the site of the securing device when a load is applied on to the optical fibre, the rest of the fibre is able to move and stretch (within its safe limits) within the tube along the rest of its span. This provides the important benefit of allowing unequal loading on different parts of fibre span to be shared out or equalised along its length.

The locking or securing effect of positioning the fibre within the tube is effected when the fibre is pulled, which causes the fibre which was lying loose within the tube to bear upon or contact with the inner diameter of the tube substantially along its entire length, resulting in the creation of frictional forces along those touching surfaces. Because of the substantially continuous contact between the fibre and tube inner surfaces, the load pulling on the fibre is distributed along the length of the optical fibre, thus avoiding the creation of a pinch point on any one part of the fibre.

The positioning of the tube and fibre within in the form of helix allows for the formation of coils of a smaller diameter than would be the case of "straight coiling" the tube.

In preferred embodiments of the invention, the populated tube is wound about a shaft and its helical configuration both guided and retained in place by a groove which traverses the surface and full length of the shaft.

According to a second aspect of the invention, there is provided a securing device for discouraging movement of an optical fibre within a tube, comprising positioning means to positioning the tube in a helical configuration equal to or greater than the optical fibre minimum bend radius, and retaining means to retain the tube in the helical position.

According to further aspects of the invention, there are provided methods of using the securing device, and an aerial telecommunications system including a securing device of the invention.

The method and apparatus of the present invention address the above problems and issues especially, but not exclusively, in the provision of FTTx connections to customers, in particular those customers currently served by copper telecommunications connections arriving at their premises by an overhead feed. In particular the invention seeks to address issues relating to the integrity of the fibre unit and cable and the protection of vulnerable points and sections of the fibre unit or cable.

Systems, methods and apparatus embodying the present invention will now be described by way of example only, with reference to the following drawings, wherein:

Figure 1 is a schematic diagram showing elements of an aerial installation;
Figures 2A and 2B are views of a securing device according to the invention;
Figure 3 depicts the method of installing a tube onto the securing device;
Figure 4 shows the storage location of a securing device in a typical fibre joint closure;
Figures 5A and 5B are a schematic top views showing paths taken by an optical fibre within a tube during its use with the securing device;

Figure 6 is a diagram comparing the effects of two coiling methods; and
Figure 7 illustrates a method of manufacture of the securing device.

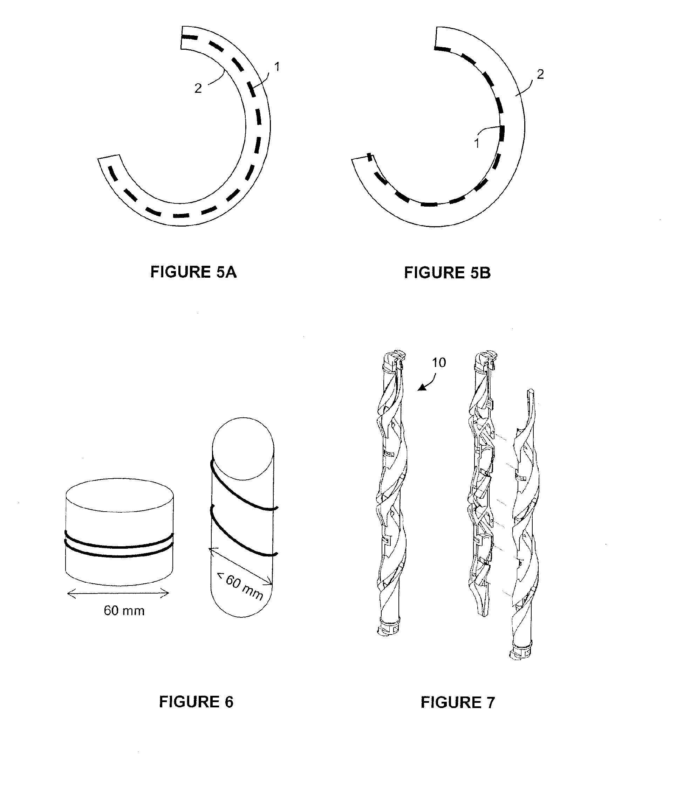

Figure 1 is a schematic view of a part of a network delivering a telecommunications service to customer premises by an overhead feed, using the blown fibre technique. An empty blown fibre droptube (2) is initially provisioned on utility or telephone poles (4) along a path between customer premises and a distribution point, here represented by a joint closure box e.g. of the type shown in Figure 6, which includes an optical node. The node can be located in an underground footway box, in a cabinet at ground level, up a telegraph pole (4), or on customer premises (5).

When the decision is made to populate the tube with optical fibre, a fibre unit (comprising e.g. a bundle of individual optical fibre such as that described in EP521710) is blown through the tubing using pressurised air, from one end or the other of the route described by the tubes between the joint box and the customer premises. The optical fibre is then terminated, typically in the form of a splice (6), at each end of the span or spans over one or more poles, one within the joint closure node and one at the customer premises end.

Figures 2A and 2B are respectively front and side views of an exemplary securing device (10) of the invention, before a tube is wound onto it. It comprises a shaft (12) with two terminal ends (14, 16). A groove (18) is disposed in a helix on the outer surface, and along the length, of the shaft.

In a embodiment shown in the figures, the groove is of constant pitch and diameter although this is not essential, as long as the groove is capable of holding the tubing in a helical formation along the length defined by the shaft in which the loops created are spaced a minimum distance from each other. The groove in the embodiment shown in Figures 2A and 2B takes 3 turns to traverse the length of the shaft which has a length of about 142 mm and a diameter of 8 mm. The number of turns of the grooves is related to the pulling force that may be bourne by the securing device, as will be discussed further below, and so may be varied depending on need - for example, the groove in the securing device embodiments shown in Figure 7 takes 2.5 turns.

The groove is configured to receive a blown fibre tube in a friction fit, and so is dimensioned according to the diameter of the tube it is meant to be used with. In the embodiment shown, the bottom of the groove has a substantially rounded or "U"-shaped cross section to provide a snug fit for the tube to be received therein, although a square, angled, or any other cross sectional shape may be adopted e.g. for easier production. In the preferred implementation depicted in Figures 2A and 2B, the tube gripping capability of the groove is improved with the addition of castellation-like walls (20) which extend axially outwards from the shaft on either side of the groove, which increases the depth of the groove channel with more surface area contact for improved frictional grip of the tubing when inserted. The skilled person would appreciate that the castellated structures are not essential to the invention as there are a number of ways to improve tube retention, such as increasing the depth of the grooves, texturing the bottom of the groove, using deformable materials, using separate retaining means such as clips or a cap over the shaft.

The skilled person would also understand that although the shaft is depicted in the drawings to be cylindrical, that this too is inessential, and that the shaft can be of any configuration (conical, having an oval, square or other cross section) as long as it is capable of defining the helical path to be taken by the tube.

The two ends (14, 16) of the shaft each take the form of "C"-shaped rings, and the side view of the securing device shown in Figure 2B shows how the gaps in the end ringed portions coincide with the ends of the groove path along the shaft. This allows for the sections of the fibre tube leaving the groove at each end, to be pushed into the gap defined within the ringed shaft endings, and kept in place by retaining tabs (22).

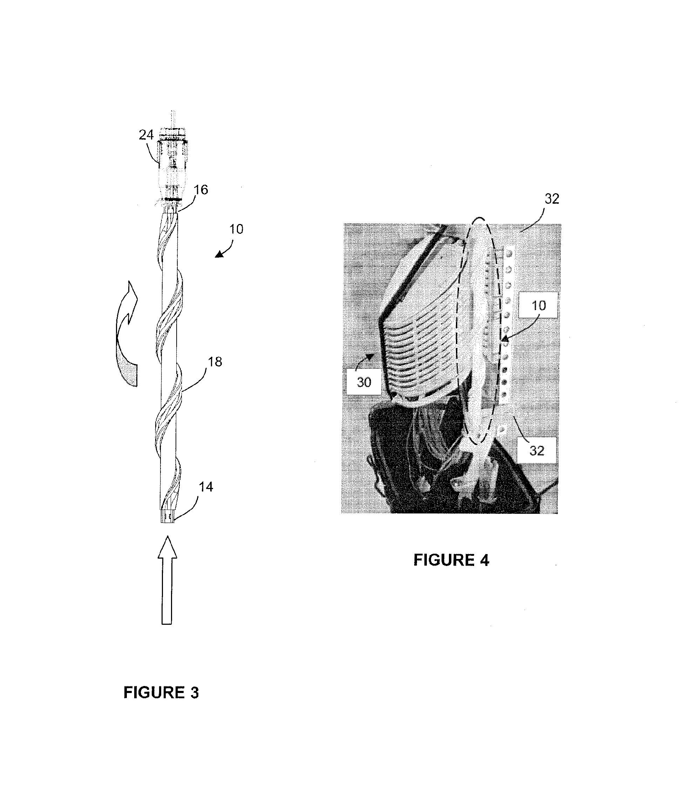

In use, the securing device is likely to be deployed in e.g. a fibre joint at or near a splice (6 in Figure 1), and is interconnected to other tubes using connectors, which together define the tubular path taken by a length of fibre unit between splice points. Figure 3 shows the embodiment of securing device fitted with a gas/water blocking connector (24) (which respectively helps prevent moisture from reaching the fibre unit, and to prevent gas from travelling via the fibre tubes into premises) onto one end of the shaft; the other end will can be similarly fitted by a connector. Depending on the implementation, the connector can be a "straight" connector which simply interconnects the securing device to a tube. In one embodiment, the securing device (10) is deployed in a fibre joint (30) of the type depicted in Figure 4 which serves 24 customers. In this implementation, receiving brackets (32) hold the securing devices in place; it can be seen in this view that the securing device is small and slim enough to enable fibres for 24 separate customers to be dealt with within the envelope or footprint of the joint closure.

In use, the securing device is preferably supplied with the joint closure in the position shown in Figure 4, and with empty blown fibre tube already pre-installed in the groove. To populate the tube with fibre, a preferred installation method is to remove the tube from the grove by removing the bottom part of the shaft from the lower bracket arms, leaving the upper shaft section and connector (24) in place. Any connector on the bottom end (14) is removed, and the empty tube uncoiled from the shaft starting from the bottom. The tube is straightened as much as possible, and the fibre then threaded or pushed through the tube upwards toward the opposite end of the shaft (16) and through the connector. The now-populated tube is then replaced into the grooves of the shaft and the bottom end (14) of the device reinstated to the brackets. In this implementation, the connector (24) serves a water blocking function, and so this is activated in the conventional way.

Figures 5A and 5B helps to demonstrate the securing or locking effect of coiling the tube. In these schematic views of a coil of tube (2) with an optical fibre or fibre unit (1) within, it can be seen that the fibre unit is narrower than the bore diameter of the tube, allowing the fibre space to move axially within the tube. Upon replacement of the tube into the groove on the shaft, the fibre within is loose within the tube as it is not under tension, and free to move as shown in Figure 5A.

When loading is placed on the cable span at any point, the fibre moves within the tube along its length to try to find equilibrium along the span. The effect of the strain is transmitted towards the ends of the installation, and the fibre within the tube wound around the securing device is then subject to pulling. When this happens, the fibre assumes a position shown in Figure 5B, in which it bears tightly upon the inner diameter of the tube throughout its length along the helix of the shaft.

The contact between fibre unit and inner tube surface in this manner results in the creation of sections of friction which discourage relative movement of the parts. In the formula for what is sometimes known as the capstan effect:

$$T_1 = T_2 e^{\mu\theta}$$

where
$T_1$ is the pulling force
$T_2$ is the restraining force
$\mu$ is the coefficient of friction between the surfaces
$\theta$ is the angle of wrap (in radians)

It can be seen that the restraining force required to counteract the pulling force is related to the friction level between the surface of the fibre and the tube, as well as the number of turns of the tube.

Thus, the gripping force obtained from the friction generated can be increased or decreased by changing the type of tube, the type of fibre unit, and the number of wraps or turns of the cable. In the embodiment shown in Figure 7, the groove goes through 2.5 turns in this embodiment, and a tube installed along such a groove is capable of withstanding a pulling weight of 1.5 kg on the fibre. The securing device depicted in Figure 2 requiring the tube to go through three turns allows the fibre resist moving in the event of an even greater pull on its length.

The level of friction within the tube can be further increased by providing the tube with a high-friction inner surface for an even greater gripping effect when the fibre bears upon the inner surface of the tube when it experiences a pulling force upon it..

When the loading on the cable is removed, the pulling force acting on the fibre is reduced or removed, and the fibre position within the tube resumes its loose or relaxed position as depicted in Figure 5A.

In the invention, the blown fibre tube with the fibre within it is advantageously wound in a helix in three dimensions as guided by the groove, as this serves to accommodate the minimum bend radius of the optical fibre in a looped arrangement about a smaller diameter. This may be contrasted with forming coils the tube in a single roll as if on a flat surface (in the manner depicted by the coil on the left hand side of Figure 6). As demonstrated in Figure 6, a fibre having a minimum bend radius of 60 mm cannot be wound more tightly than in a coil of 60 mm in diameter, and so anything it is wrapped around must be equal to or greater than 60 mm. However, the same fibre can be wound in a helical formation about a cylinder of a smaller diameter, as part of the fibre length making up the circumference of the loop is taken up along its path diagonal to the longitudinal axis of the cylinder as it turns in three dimensions.

The above configuration enables the securing device of the invention to provide secure locking for the fibre within the tube in a manner which avoids the creation of any pinch point of weakness through the distribution of frictional forces over a greater length in the form of fibre bearing upon the inner surface of the tube when a load is placed on the cable. Guiding the fibre in the tube through a helix formation helps to considerably reduce the overall size of the securing mechanism into a neat device capable of being incorporated into a joint closure or for use at customer premises. Blown fibre requires a tube to define its path in any event, and its use to achieve the securing effect is convenient and very cost-efficient. The device is in any case very inexpensive to mass manufacture using an injection moulding technique to produce sections of the types shown in Figure 7 which may be snap-fitted together to form the shaft. The device can be made of different materials depending on its application - if it is for use within a relatively protected space like inside a joint closure, it can be made from a lightweight and inexpensive plastics material.

In an optimal implementation, the helical path taken by the tube is configured so that it allows for the fewest number of turns (thus reducing the length of shaft required) on the slimmest possible shaft while retaining the capacity to withstand the expected pulling force on the fibre in the environmental conditions of its application. The pitch of the helical path need not be constant or regular, as long as it does not cause the fibre to bend beyond its minimum radius.

It would be appreciated by the skilled person that the invention can be implemented in ways other than by using the securing device shown in the drawings and described above. As long as the fibre in the tube is held in a helical configuration, the advantages of the invention outlined above can be realised. Thus, for example, it is not necessary for the tube to be held in its helical coil configuration using a groove. The tube could be held in position using external clips or brackets, for example. Furthermore, a shaft is a good way of getting the tube to assume the helical coil configuration but there may be other ways to achieve this, e.g. by use of a skeletal structure capable of holding tube in a helical position.

The apparatus, methods and configurations described above and in the drawings are for ease of description only and not meant to restrict the invention to any particular embodiments. It will be apparent to the skilled person that various sequences and permutations on the apparatus and methods described are possible within the scope of this invention as disclosed. The invention can also be applied to applications outside blown fibre installations, wherever an elongate member within a tube is secured at each end experiences a pulling force transmitted along its length.

**Claims**

1. A method of discouraging movement of an optical fibre within a tube, by positioning the tube in a helical configuration comprising curves with dimensions equal to or greater than the optical fibre minimum bend radius, and causing the optical fibre to bear upon the tube inner surface when a pulling force is applied to the optical fibre.

2. A method according to claim 1 wherein the tube is positioned by winding it around a shaft and retaining it in the helical configuration.

3. A method according to claim 1 or claim 2 wherein the tube is positioned and retained in position by friction-fitting it into a groove traversing the surface of the shaft in the helical configuration.

4. A securing device for discouraging movement of an optical fibre within a tube, comprising positioning means to positioning the tube in a helical configuration equal to or greater than the optical fibre minimum bend radius, and retaining means to retain the tube in the helical position.

5. A securing device according to claim 4 wherein the positioning means and the retaining means comprises a groove traversing the surface of a shaft in the helical configuration.

6. A securing device according to claim 5 further including castellations on each side of the groove.

7. A securing device according to any one of claims 4 to 6 including a tube positioned in the helical position.

8. A method according to any one of claims 1 to 3 using a securing device according to claim 7 comprising

   - removing the tube from its position,
   - installing the optical fibre through the tube, and
   - repositioning the tube in the helical position.

9. A method according to claim 8 further including

   - applying a pulling force on the optical fibre, and
   - causing the optical fibre to bear upon the tube inner surface.

10. An aerial telecommunications system including a securing device of any one of claims 4 to 7.

11. An aerial telecommunications system according to claim 10 further including an optical fibre installed within a tube retained the helical position by the securing device.

**FIGURE 1**

**FIGURE 2A**

**FIGURE 2B**

FIGURE 3

FIGURE 4

**FIGURE 5A**

**FIGURE 5B**

**FIGURE 6**

**FIGURE 7**

Europäisches
Patentamt

European
Patent Office

Office européen
des brevets

# EUROPEAN SEARCH REPORT

**Application Number**

EP 10 25 1371

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 245 432 A (KABELMETAL ELECTRO GMBH [DE]) 2 January 1992 (1992-01-02) | 1,2,4, 7-11 | INV. G02B6/48 |
| Y | * figure 2 * * page 2, line 32 - line 35 * | 3,5,6 | |
| Y | WO 2008/108373 A1 (SUMITOMO ELECTRIC INDUSTRIES [JP]; YASUI MASATOSHI [JP]; AIHARA KATSUY) 12 September 2008 (2008-09-12) * figure 17 * | 3,5,6 | |

TECHNICAL FIELDS
SEARCHED       (IPC)

G02B

The present search report has been drawn up for all claims

| Place of search | Date of completion of the search | Examiner |
|---|---|---|
| Munich | 1 February 2011 | Orignac, Xavier |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO FORM 1503 03.82 (P04C01)

**EP 2 416 196 A1**

## ANNEX TO THE EUROPEAN SEARCH REPORT
## ON EUROPEAN PATENT APPLICATION NO.

EP 10 25 1371

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2011

| Patent document cited in search report | | Publication date | Patent family member(s) | | Publication date |
|---|---|---|---|---|---|
| GB 2245432 | A | 02-01-1992 | DE | 4019692 A1 | 02-01-1992 |
| WO 2008108373 | A1 | 12-09-2008 | NONE | | |

For more details about this annex : see Official Journal of the European Patent Office, No. 12/82

EPO FORM P0459

11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 108590 A
- WO 2007113522 A
- EP 1557707 A
- FR 27074345
- EP 521710 A